# EUROPEAN PATENT APPLICATION

(11) **EP 0 837 323 A2**
(43) Date of publication of application: **22.04.1998**
(21) Application number: 97118016.1
(22) Date of filing: 17.10.1997
(51) Int. Cl.: G01N 21/89

(54) **Method of and system for video surveillance of a fast moving web**

(30) Priority: 18.10.1996 US 732684
(71) Applicant: CONSOLIDATED PAPERS, INC., Wisconsin Rapids, Wisconsin 54495 (US)
(72) Inventor: Reitter, Thomas W., Wisconsin Rapids, Wisconsin 54494 (US); Schoenborn, Gary A., Wisconsin Rapids, Wisconsin 54495 (US)
(74) Representative: Dr. Weitzel & Partner

(57) **Abstract**

A method of and system for video surveillance of a fast moving web monitors a continuous web of material passing through a papermaking machine. A plurality of video cameras arranged on the back and front sides of the machine monitor the web at selected locations of interest along the papermaking path. Outputs from the cameras are applied to associated video tape recorders. Upon detection of a web break, the video recorders are stopped and then operated to play back the various images of the web that were recorded just prior to the break. Outputs from the video recorders are coupled through time base correctors to a plurality of a quads, with each quad receiving inputs from four video recorders. Each quad is connected to an associated video monitor and is selectively controlled so that the monitor either displays in quadrant fashion all four views from the associated video recorders or displays only a selected one of the views. The time base correctors eliminate jitter in the monitor displays that would result from the video recorder tapes being mechanically driven. A computer enables an operator to control the system with a graphical interface and utilizes a frame grabber that converts an analog output signal from a quad to a digital format that can be stored for later retrieval, manipulation and analysis.

## Description

### Background of the Invention

The invention relates to a method of and a system for obtaining, storing and displaying the conditions of a web moving at high speed, such as a paper web, for analysis purposes. In particular, the invention relates to a method and system utilizing video cameras for obtaining visual displays of a moving web for the purpose of analyzing and determining causes of web failures and breaks, including the recording, storing and displaying of such information through the use of video tape recorders in a surveillance system that permits recorded visual information on the web to be output in either or both of a visual format via video display monitors or in a computer format via a computer monitor and/or by other computer media such as printers, floppy discs, hard drives, RAMs, etc.

In making paper, a continuous web of material is passed over a plurality of rolls. The web is formed from a slurry of bleached pulp fibers, clay, starch, various additives and water. The slurry is received from a headbox by one or two endless wire screens, where it is formed into a relatively wide uniform sheet that is dried between a plurality of rolls and eventually wound onto reels in the form of large paper rolls. The continuous web may have a width on the order of 25 feet, and the forming process utilizes both heat and pressure to form a relatively thick mass of the slurry into a thin layer of dry paper wound onto a reel at the exit end of the paper machine. During the forming process, the continuous web encounters a variety of types of rolls and tension control devices. Such devices include initial heat drying drums, drum rollers, thickness reduction rollers and, in the case of high gloss papers, supercalender rollers.

Where a continuous web of material such as paper is processed as a continuous length of material from beginning to end, maintaining the integrity of the web is critical to the continued operation of the process. However, since defects and imperfections in the web occur from time to time, and because the papermaking equipment itself can get out of calibration, web failures occur. In addition, the continuous web moves quite rapidly, so when a break in the web occurs, it happens very rapidly and, even if viewed in real-time, the cause of the break often is not apparent. Thereafter, if may be extremely difficult to determine the exact cause of the web failure. Although devices exist to monitor the continuity of the continuous web and to shut down the paper machine quickly should a web break occur, such devices do not aid in determining the actual cause of web failure.

An important step in improving paper machine runnability is to pinpoint where web breaks are occurring, so that the cause of the break can be corrected. However, determining the exact location of a web break is becoming more difficult as machine speeds increase. Heretofore, various attempts have been made to capture the conditions of a moving web for later analysis, which attempts include recording the passage of a continuous web of paper on video tape that can subsequently be replayed and analyzed to allow inspection of the web to be carried out separately from the real-time web processing. One such exemplary system is disclosed in U.S. Patent No. 5,239,376, assigned to Lake Superior Paper, Inc., a subsidiary of Consolidated Papers, Inc., the assignee of the present invention, and the teachings of which are specifically incorporated herein by reference. In the system taught by said patent, a plurality of video cameras are utilized to capture a series of events taking place generally simultaneously on and along a web of paper traveling through a paper machine. The events are recorded on a plurality of video tape recorders, one for each camera. When an event such as a web break occurs, the recordings made by the video recorders can be displayed on a plurality of video monitors, with two camera outputs being linked on split screens of a single monitor for visual analysis by an operator to determine the cause of the web break. So that one of the split images on a monitor screen will not "roll" while the other image remains constant, the plurality of video cameras are all commonly time synchronized. In analyzing the split images on one or more monitors, the operator may note that a small tear may have first been initiated in the web at a certain position in the web (in a cross web direction) and at a certain camera location (for example, near the wet end dryers), and then deduce that such tear was the principle cause of the web break. This type of analysis provides the operator with an excellent indication as to where to first look on the machine for the cause of the web failure and therefore the cause of the web break, which significantly shortens the time required to determine the cause of the break and in turn greatly reduces downtime of the paper machine and the return of the machine to production, resulting in very significant cost savings. Even a few minutes reduction in downtime of a paper machine incident to such breaks, or a reduction in the number of breaks as a result of an ability to quickly and accurately determine and correct the cause of a break, is of great economic value, as downtime cost on a large paper machine can be on the order of $90,000 per hour.

Each time the paper web fails, the papermaking process is interrupted while the cause of the breakage is determined, any necessary equipment repairs made, and the continuous web rethreaded so that the machine can resume operation. The downtime required is very expensive as the entire papermaking process comes to a standstill, so minimizing downtime is a very important consideration. Rapid diagnosis of the cause of web breakage or failure is therefore critical with respect to the time it takes to conduct any necessary repairs and restore the paper machine to full operation.

A video surveillance system that can monitor the continuous web of a papermaking machine in a manner such that when a break occurs, the interval just prior to the break can be replayed to determine the probable cause of web failure, has remained a definite need with respect to the operation of paper machines. While the video surveillance system of said patent no. 5,329,376 is very useful and valuable, it requires a relatively large number of monitors for a given number of video cameras to display the visual information and can present such information only in a video monitor-video recorder format. Further, during playback there can be an instability of the visual display in the form of jitter that results from the video tapes in the video recorders being mechanically driven.

### Objects of the Invention

An object of the present invention is to provide a web surveillance video system that visually monitors and records the continuous web of a papermaking machine, so that when a web break occurs the interval just prior to the break can be replayed to determine the probable cause of web failure.

Another object is to provide such a web surveillance video system in which multiple video monitors with simultaneous multiple view capability are used to display the replayed images.

A further object is to provide such a system in which recorded video information about the web, as output by video tape recorders, is time base corrected during replay to eliminate jitter of the image(s) on the monitors.

Yet another object is to provide such a system that includes conversion of a replayed analog video signal to a digital computer database format for storage and subsequent retrieval and analysis.

### Summary of the Invention

The present invention provides a web surveillance video system for monitoring a continuous web of material moving along a path of travel through a papermaking machine. The system comprises a plurality of video cameras, each for addressing a different location of interest of the web along its path of travel through the papermaking machine and for producing a video output signal. Included are a plurality of video recorders, each for receiving at an input thereto and recording on a video tape, and for playing back and producing as an output signal, the video output signal from an associated one of the video cameras. The system has at least one video monitor, as well as means for coupling the video recorder output signals to the at least one video monitor to selectively displaying on the at least one video monitor either an image from a single one of the video cameras or a sequence of images from more than one of the video cameras. To provide a jitter-free image on the video monitor or to at least substantially reduce jitter, also included are means for time base correcting the video recorder output signals that are coupled to the at least one video monitor. In addition, the system includes means for receiving and responding to an independent alerting signal that indicates the occurrence of a web event to be reviewed and for causing the video recorders to cease recording upon occurrence of the alerting signal, so that the event can be reviewed on the at least one video monitor.

In a preferred embodiment, computer means are provided for controlling operation of the system. The event to be reviewed is a failure of the continuous web, and to provide on the video monitor a clean, jitter-free image of the failure, the means for time base correcting the video recorder output signals causes horizontal syncs of the signals to occur at uniform intervals. The means for coupling the video recorder output signals to the at least one video monitor comprises at least one quad for receiving four video recorder output signals and for reformatting the four signals into a single video output signal that is coupled to the at least one video monitor for display of the four images in quadrant fashion. The system has computer means for storing in digital form at least a selected portion of the video output signal for subsequent retrieval and analysis.

The invention also contemplates a method of monitoring a continuous web of material moving along a path of travel through a papermaking machine. The method comprises the step of generating a plurality of video signals representative of images of the continuous web at selected different locations of interest of the web along its path of travel through the papermaking machine. Also included are the steps of recording each video signal on an associated video tape; generating an alerting signal upon occurrence of a web event to be reviewed; interrupting the recording step in response to generation of the alerting signal; and generating playback video signals, following interruption of the recording step, by playing back at least the most recently recorded portions of each video tape. In addition, included are the steps of time base correcting the playback video signals, and displaying on at least one video monitor an image representative of one or more time base corrected playback video signals.

In a preferred practice of the method, the step of generating a plurality of video signals generates at least one group of four video signals, so that the time base corrected playback video signals comprise at least one group of four such signals, and included is the step of reformatting each group of four playback video signals into a single playback video signal. The displaying step comprises selectively displaying on a video monitor associated with each reformatted playback video signal either an image in quadrant fashion that is representative of the four separate views of the web that have been reformatted into the single playback video signal, or a full screen image that is representative of any one of the four separate views. The preferred practice also includes the steps of printing a recorded video frame of interest as displayed on the video monitor, and using a computer to control performance of the method. So that web failures may later be reviewed, at least a portion of each reformatted playback video signal may be selectively stored for subsequent retrieval and analysis.

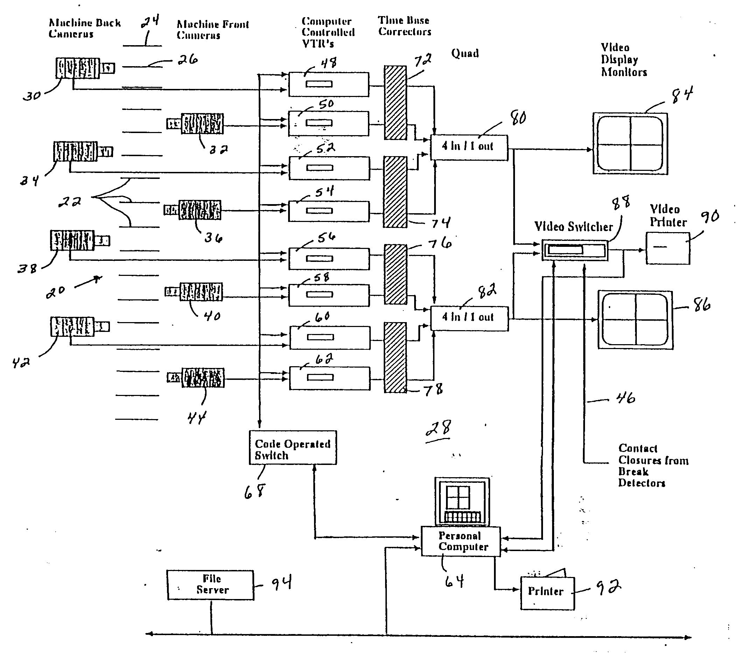

The foregoing and other objects, advantages and features of the invention will become apparent upon a consideration of the following detailed description, when taken in conjunction with the accompanying drawing.

### Brief Description of the Drawings

The single drawing figure is a block diagram representation of a web surveillance video system according to the invention.

### Detailed Description

During manufacture of a continuous web of paper, disruptions can occur that result in failure of the paper web and lost production. Consequently, an important step in improving paper machine runnability is to pinpoint the location in the paper machine where web failures occur. However, determining the exact location of a web failure has become increasingly difficult as machine speeds increase. The use of video equipment to monitor and record the web during manufacture has been found to provide valuable information that facilitates determining the precise location and cause of paper web failures, thereby minimizing downtime of the paper machine. The web surveillance video system of the present invention improves upon known video surveillance systems and results in a more rapid and accurate determination of the cause of a web failure and a reduction in downtime of a papermaking machine incident to web failures.

The drawing shows a schematic layout of a papermaking machine. indicated generally at 20, in which the wet section or initial web forming portion of the machine is at the top of the drawing and the final finished paper section is at the bottom. The paper machine includes a plurality of rolls 22 including an initial center roll 24 and a press roll 26.

Also shown in the drawing is the web surveillance video system of the invention, indicated generally at 28. The system includes a plurality of video cameras, such as eight video cameras 30, 32, 34, 36, 38, 40, 42 and 44, located on the back and front sides of the paper machine at selected strategic locations along the path of travel of a continuous paper web through the machine. The video cameras may be Panasonic Model WV-CP612 cameras, and provide a means for representing views of the web, at the selected locations, as electronic signals. While eight video cameras are shown, more or less may be used, the number employed being generally in accordance with the number of locations in the paper machine where web failures are most likely to occur. A plurality of conventional sheet break detectors (not shown) as are customarily used with a papermaking machine and that monitor the continuity of the paper web in a well-known manner provide a signal on a cable 46 upon occurrence of a break in the continuity of the web.

As the video cameras are normally located close to the moving web and within the confines of the papermaking machine itself, they are exposed to the extreme conditions utilized in forming, rolling and drying the web. Each camera must therefore be protected from a hostile environment of relatively high temperatures and humidity, and for the purpose each camera is contained within an enclosure (not shown) that provides mechanical protection for the camera and, as the need requires, thermal protection also.

A video output signal from each video camera, which for the particular cameras used is an analog signal, is coupled to an input to an associated one of a plurality of video tape recorders 48, 50, 52, 54, 56, 58, 60 and 62. Each video recorder provides a means for recording onto a video tape the analog video signal representative of the image of the web viewed by its associated video camera and for subsequently replaying the recorded signal. Each video recorder may comprise a Panasonic Model AG-6730 video recorder, and each has a communication port that allows it to be controlled by a separate signal source. In the video surveillance system of the invention, the communication port of each video recorder is connected to be controlled by a personal computer 64, which may be an IBM compatible ESE 486DX2 personal computer. The personal computer provides foundation for control of the video surveillance system by providing communications to other system components, to interface points between the user and the system, and to the environment where various control and interface programs reside. Control signals developed by the personal computer are applied through a code operated switch 68 to the communication ports of the video recorders. The code operated switch supports communication in the video surveillance system by allowing a single computer communication port to individually address a multitude of output ports connected to the communication ports of the video tape recorders. The code operated switch may be a Black Box COS-16.

Analog video output signals from the video tape recorders are coupled to inputs to time base correctors 72, 74, 76 and 78, which may comprise Feral model LC 4:2:2 devices. Each time base corrector receives the output signals from two video recorders. The outputs from the video recorders 48 and 50 are coupled to the time base corrector 72, the outputs from the video recorders 52 and 54 are coupled to the time base corrector 74, the outputs from the video recorders 56 and 58 are coupled to the time base corrector 76, and the outputs from the video recorders 60 and 62 are coupled to the time base corrector 78. The time base correctors enhance video displays developed on video monitors during playback by the video tape recorders by eliminating jitter in the displayed images. They do this by time base correcting the analog video output signals from the video recorders by means of synchronizing each frame of video display that is output from each video recorder to a uniform 1/30 of a second time base. In operation of the time base correctors, a signal received from a video recorder is stored for a period of one frame, i.e., for two vertical sweeps of a raster, following which the stored frame is written out with new timing information. Essentially, the time base correctors cause the horizontal syncs of the output signals from the video recorders to always occur at the same uniform time interval, i.e., at the 1/30 second interval of a frame. This advantageously corrects timing errors that occur in the output signals from the video recorders. Ideally, a horizontal sync would occur in the output signal from a video recorder at 1/30 second intervals. However, because a video recorder uses a mechanical drive for a video tape, variations occur in the speed at which the video tape is mechanically driven, resulting in variations in the intervals between the horizontal syncs in the video recorder output signal. The time base correctors eliminate such variations by causing the horizontal sync interval to always be 1/30 second. This, in turn, provides a jitter free image on a video monitor to which the video recorder output signal is applied, even during freeze frame viewing.

Outputs from the time base correctors 72 and 74, which are the time base corrected analog video output signals from the video recorders 48, 50, 52 and 54, are applied as inputs to a quad 80. In a like manner, outputs from the time base correctors 76 and 78, which are the time base corrected analog video output signals from the video recorders 56, 58, 60 and 62, are applied as inputs to a quad 82. Each quad 80 and 82 may be a Panasonic model WJ-420 quad, and each reformats the four separate time base corrected analog video input signals at its inputs into a single analog video output signal that is coupled as an input to an associated video monitor 84 or 86. Each quad is of the switched type and can be controlled so that all four video signals at its inputs are simultaneously presented at its output as a single reformatted video output signal that shows all four views for display by its video monitor in quadrant fashion, or so that only a selected one of the views contained in the single reformatted video output signal is presented at its output for full screen display by its video monitor. The video monitors 84 and 86 may be of the Panasonic model CT-2084Y type, and depending upon the switched setting of the quads 80 and 82, will display all four views from their associated video recorders in linked quadrant fashion, or will display only a single selected one of the views.

The outputs from the quads 80 and 82 are also coupled to inputs to a video switcher 88, which may be of a type sold by Panasonic as model WJ-SQ508. An output from the video switcher is coupled as an input to a video printer 90, which may be of a type sold by Panasonic as model AG-EP50. The video switcher is a multi-purpose device that can be controlled to send just one of a plurality of video input signals to a designated location, e.g., to an input to the video printer 90. The video switcher can also be controlled to provide for processing of external alarms, such as occur on the cable 46 from a web break detector, and to communicate with other electronic equipment, such as with the personal computer 64. The video switcher is operable, for example, to develop at the input to the video printer 90 an analog signal from the quad 80 or 82 that is representative of a single video frame developed at the output from a selected one of the video recorders, with the video printer then being operable to generate a hard copy image of the video frame. The video switcher also is coupled to the personal computer 64, which can have an associated printer 92. The personal computer is therefore adapted not only to control the operation of the web surveillance video system 28, but also to receive video signals from the video switcher and to generate hard copy representations of the same on its printer 92, or to utilize the video printer 90 as otherwise desired. The surveillance system may also include a file server 94 that is coupled to the personal computer and a frame grabber utilized by the personal computer to accommodate storage of information for later retrieval and analysis.

Video cables are employed to carry video signals throughout the surveillance system, and may be provided with high temperature jackets and protected from electrical and mechanical interference to the extent necessary. A patch panel (not shown) may advantageously be used to facilitate configuration and reconfiguration of the system.

An operator can readily control the web surveillance video system 28. The view displayed by each monitor 84 and 86 is determined by switches on its associated quad 80 or 82, such that a monitor can simultaneously display in its four quadrants four views as represented by the four video signals then being input to its associated quad, or just a selected one of the four views. The video tape recorders 48, 50, 52, 54, 56, 58, 60 and 62 are conveniently controlled by using a mouse and selecting "buttons" on the monitor screen of the personal computer 64 that correspond to tape direction, speed and record or playback. If desired, the video images can also be displayed on the personal computer monitor. Also, since the video printer 90 is in-line with the computer display, status information on the video printing process may be provided on the computer monitor, and a selection may be made by mouse between the quads 80 and 82 to route selected signal groups to the computer. The computer program used to operate the system is based upon Panasonic's Proteus for Windows PFW-300. The Panasonic Proteus System is configured to result in the specific commands needed by the surveillance system to respond to alarm conditions and to support convenient and easy operator control of the system. The particular configurations are flexible and reconfigurable, and depend upon factors such as the number of cameras, alarm types to be processed, desired control functions, hard copy options, system security needs, and the like.

The web surveillance video system 28 is designed to gather video information from a large number of remote locations and to efficiently concentrate the information. For example, by developing groups of four views at the four quadrants of each of the video monitors 84 and 86, and by enabling convenient switching between a quad-view and a single-view on a monitor, an operator can quickly isolate the view of choice in the quad-view, and then switch to a single-view for detailed inspection of a web failure site. Advantageously, the video monitors have large screens, so that the quad-views have the same detail as they would have if displayed on a smaller monitor using a single-view system, and so that a single-view presents considerable detail. Concentration of the gathered information is assisted by the video switcher 88, which enables an operator to select between the quads for the signal to be presented to the video printer 90. The concentrating ability of the system also allows all of the video recorders to be simultaneously controlled, so that all of the quad-views on the monitors are linked and move relative to each other in time, which enables the sequence of views to be moved forward or in reverse without disrupting the time relationships between the various views.

Web failures resulting in web breaks are items of interest for the surveillance system 28, so the web break detectors already conventionally employed on the paper machine provide a convenient independent alerting signal source to indicate a web break and shut down the video recording process. This capability of responding to the paper machine web break detectors is provided between the software package and the video switcher 88 that receives indications of web breaks over the cable 46.

In operation of the web surveillance video system 28, the video cameras 30, 32, 34, 36, 38, 40, 42 and 44 send analog video signals comprising electronic representations of their views to their respective video tape recorders 48, 50, 52, 54, 56, 58, 60 and 62 during the normal operation of the papermaking machine. At this time, all of the video recorders are operated in the record mode to record on their video tapes the analog video signals representing continuous images of the paper web at the locations of the video cameras along the path of travel of the web through the paper machine. The video recorders run continuously, except during routine rewind operations or upon occurrence of a web break condition.

Upon occurrence of a web failure as indicated by the independent web break detection system of the paper machine, an alarm signal is generated on the cable 46 and is registered at the video switcher 88, which in turn directs the personal computer 64 to stop the recording process. All of the video recorders then stop and wait for an operator to attend the system. Because the web break is usually detected downstream from the actual web failure location, it is likely that one or more of the video cameras will have seen the failure occur.

To analyze the occurrence of web failure, the operator uses a mouse to acknowledge the alarm. The operator then uses the mouse to activate "buttons" on the computer display to move the video recorder tapes forward or backward at normal speed, at speeds reduced with respect to normal, or frame by frame, to observe the web failure from where it originated all the way through the machine. At this time, operating the quads 80 and 82 to display quad-views on the video monitors 84 and 86 allows the operator to observe linked views of the web run in the forward or reverse direction at all camera locations. The view of interest is located by using the speed and direction controls with the video displays. Once the particular view of interest is determined, i.e., the view showing the beginning of web failure, the quad-view on the appropriate monitor is replaced with a single-view of the view of interest, so that detailed analysis of the view can be performed. A hard copy image of the video view of interest can also be obtained by means of the video printer 90, and the status of the printing operation can be made available by calling up the video display onto the computer display. While displaying the recorded images either at normal speed, at speeds reduced with respect to normal, or in a frame by frame manner, the time base correctors 72, 74, 76 and 78 time base correct the video signals output by the video recorders in such manner that the viewed image(s) on the video monitors 84 and 86, and any hard copy print provided by the video printer 90, are jitter-free. This unique feature of obtaining a jitter-free image by means of the time base correctors greatly enhances the ability of the operator to see and thereby to quickly and accurately locate and determine the cause of web failure. Once the web break analysis is completed and the paper making process restarted, the operator restate the recording process by using the mouse on the computer display. The web surveillance process is then repeated.

The ability to review the critical period just prior to and during web failure at selected viewing speeds and directions and with jitter-free video displays of the web provides the input necessary to more rapidly evaluate the location and cause of the failure, so that any necessary adjustments and/or repairs can be undertaken quickly and the paper machine restored to normal operation in a reduced time. If only a defect in the paper web is to blame this, too, often will show up, thereby saving the time that would otherwise be spent inspecting the paper machine for the cause of the failure. Thus, through use of the web surveillance system of the invention, considerable savings may be realized by reducing downtime of the paper machine.

While one embodiment of the invention has been described in detail, various modification and other embodiments thereof may be devised by one skilled in the art without departing from the spirit and scope of the invention, as defined in the accompanying claims. For example, while the surveillance system as described utilizes components that generate analog output signals, the invention could also be practiced with components that generate digital signals.

## Claims

1. A web surveillance video system for monitoring a continuous web of material moving along a path of travel through a papermaking machine, comprising:
a plurality of video cameras, each for addressing a different location of interest of the web along its path of travel through the papermaking machine and for producing a video output signal;
a plurality of video recorders, each for receiving at an input thereto and recording on a video tape, and for playing back and producing as an output signal, the video output signal from an associated one of said video cameras;
means for time base correcting said video recorder output signals;
a video monitor;
means for coupling said time base corrected video recorder output signals to said video monitor and for selectively displaying on said video monitor either an image from a single one of said video cameras or a sequence of images from more than one of said video cameras; and
means for receiving and responding to an independent alerting signal indicating the occurrence of a web event to be reviewed, said means for receiving and responding causing said video recorders to cease recording upon occurrence of the alerting signal, so that the event can be played back by said video recorders and reviewed on said video monitor.

2. A system as in claim 1, including computer means for controlling operation of said system.

3. A system as in claim 1, wherein the event to be reviewed is a failure of the continuous web.

4. A system as in claim 1, wherein said means for time base correcting said video recorder output signals causes horizontal syncs of said output signals to occur at uniform intervals to decrease jitter in the display of said video monitor.

5. A system as in claim 1, wherein said plurality of video cameras and said plurality of video recorders each comprise four in number and said means for coupling and for selectively displaying comprises a quad for receiving said time base corrected video recorder output signals and for reformatting said four signals into a single video output signal that is coupled to said video monitor.

6. A system as in claim 5, wherein said video recorder video output signals are analog signals, said quad reformats said four video recorder video output signals into a single analog video output signal that is coupled to said video monitor, and including means for digitizing and storing at least a selected portion of said reformatted analog video output signal for subsequent retrieval and analysis.

7. A web surveillance video system for monitoring a continuous web of material moving along a path of travel through a papermaking machine, comprising:
four video cameras, each for viewing a different location of interest of the web along its path of travel through the papermaking machine and for producing a video output signal;
four video recorders, each for receiving at an input thereto and recording, and for playing back and producing as an output signal, the video signal from an associated one of the video cameras;
means for time base correcting said four video recorder output signals during playback of said video recorders, to cause the horizontal syncs of said video recorder output signals to occur at a uniform interval;
a quad for receiving said four time base corrected video recorder output signals and for reformatting said four time base corrected signals into a single video signal;
a video monitor for receiving said reformatted video signal and displaying the four images represented thereby in quadrant fashion; and
means for receiving and responding to an independent alerting signal indicating the occurrence of a web event to be reviewed, said means for receiving and responding causing the video recorders to stop recording upon occurrence of the alerting signal, so that the event can be played back by said video recorders and reviewed on said video monitor.

8. A system as in claim 7, wherein said quad has selector means for causing said quad to output to said video monitor either said reformatted video signal so that said video monitor displays the four images represented thereby in quadrant fashion or just a selected portion of said reformatted video signal so that said video monitor displays a full-screen image of a single view represented thereby.

9. A system as in claim 8, including video printing means for printing a recorded video frame of interest.

10. A system as in claim 9, including computer means for controlling operation of said system.

11. A system as in claim 10, wherein each said video recorder has a communication port for permitting control of said video recorder by signals applied to said communication port, and including a code operated switch for coupling an output port of said computer to the communication port of a selected one of more of said video recorders for control of said selected one or more of said video recorders by said computer.

12. A system as in claim 10, including means for storing at least a selected digitized portion of said reformatted video signal for subsequent retrieval and analysis.

13. A system as in claim 10, further including a video switcher coupled to and for providing communications between each of said quad, said video printer and said computer.

14. A method for visually monitoring a continuous web of material moving along a path of travel through a papermaking machine, comprising the steps of:
developing a plurality of video signals, each representative of an image of the continuous web at a different location of interest of the web along its path of travel through the papermaking machine;
recording each said video signal on an associated video tape;
generating an alerting signal upon occurrence of a web event to be reviewed;
interrupting said recording step in response to generation of the alerting signal;
producing video playback signals, following performance of said interrupting step, by playing back at least the most recently recorded portions of each video tape;
time base correcting each video playback signal; and
displaying on a video monitor an image representative of one or more time base corrected video playback signals.

15. A method as in claim 14, wherein said step of developing a plurality of video signals develops four video signals, so that the time base corrected video playback signals comprise four such signals, and including the step of reformatting the four video playback signals into a single video playback signal.

16. A method as in claim 15, wherein said displaying step comprises selectively displaying on the video monitor either four images in quadrant fashion that are representative of the four separate views of the web that have been reformatted into said single video playback signal, or a full screen image that is representative of a selected one of the four separate views.

17. A method as in claim 16, including the step of printing a recorded video frame of interest corresponding to either a quadrant fashion or a full screen display on the video monitor.

18. A method as in claim 17, including the step of using a computer to control performance of said method.

19. A method as in claim 18, including the step of selectively storing at least a portion of each reformatted video playback signal for subsequent retrieval and analysis.
